(19) Europäisches Patentamt
European Patent Office
Office européen des brevets

(11) **EP 0 913 043 B1**

(12) **EUROPEAN PATENT SPECIFICATION**

(45) Date of publication and mention
of the grant of the patent:
**28.12.2005 Bulletin 2005/52**

(51) Int Cl.$^7$: **H04L 25/03**

(21) Application number: **97929463.4**

(86) International application number:
**PCT/IB1997/000903**

(22) Date of filing: **18.07.1997**

(87) International publication number:
**WO 1998/004073 (29.01.1998 Gazette 1998/04)**

(54) **BLIND DFE AND PHASE CORRECTION**

BLINDE ENTSCHEIDUNGSRÜCKGEKOPPELTE ENTZERRUNG UND PHASENKORREKTUR

CORRECTION DE PHASE ET DE DFE AVEUGLE

(84) Designated Contracting States:
**BE DE DK ES FI FR GB IT NL SE**

(30) Priority: **19.07.1996 US 22195 P**

(43) Date of publication of application:
**06.05.1999 Bulletin 1999/18**

(73) Proprietor: **TEXAS INSTRUMENTS
INCORPORATED
Dallas, TX 75265 (US)**

(72) Inventors:
- **SEGAL, Mordechai**
  **56746 Herzlia (IL)**
- **SHALVI, Ofir**
  **47226 Ramat-Hasharon (IL)**

(74) Representative: **Murray, Elisabeth Anne et al
Mathys & Squire
120 Holborn
London EC1N 2SQ (GB)**

(56) References cited:
EP-A- 0 729 254          WO-A-95/09493
US-A- 5 297 166

- **HATZINAKOS: "Blind equalization using
  decision feedback prediction and tricepstrum
  principles" SIGNAL PROCESSING, vol. 36, no. 3,
  April 1994, AMSTERDAM NL, pages 261-276,
  XP000435667**

**Description**

FIELD OF THE INVENTION

The present invention relates to digital communication methods and systems.

BACKGROUND OF THE INVENTION

Modems for digital communications systems are designed to cope with various channel impairments. An essential element of the modem is the start-up process in which modem parameters such as equalizer taps, carrier frequency error, timing error, and gain setting, are estimated in order to provide the required modem performance.
In the prior art, two training modes are used: 1) using a known transmitted data sequence; 2) or using the transmitted information data without any prior knowledge of the value of the transmitted data. The latter mode is known as a blind start-up.
In the prior art, it is difficult to perform a blind start-up process, with limited computational resources and to converge to a good initial setting of the modem parameters for channels that exhibit severe linear distortion which gives rise to severe inter-symbol interference (ISI), and channels that suffer from severe narrow-band interference.
US5297166 describes apparatus for performing blind mode decision feedback equalization. The apparatus includes a DFE feedback loop having an adaptive filter designed to converge during blind mode decision feedback equalization to a best approximation of the unknown, combined transmission channel and receive filter transfer function. In an example, the apparatus includes DFE circuitry for implementing a Widrow-Hoff least-mean-squared adaptation process.
Hatzinakos, Signal Processing 36 (1994) 261 - 276, describes a method of combined blind decision feedback equalization and blind carrier phase tracking for digital communication links. An algorithm employing decision feedback prediction to equalize the amplitude information of the channel is proposed.
Therefore, there is a need in the art to provide a solution for the blind start-up process of a receiver in the context of digital communications signals in the presence of severe ISI and severe narrow-band interference. There is an additional need in the art to provide relief from ISI and severe narrow-band interference for conventional blind and non-blind modems.

SUMMARY OF THE INVENTION

The present invention is a method and apparatus for a digital communication receiver which is capable of operating over channels with severe ISI and narrow-band interference in either blind or non-blind modems.
According to a first aspect of the invention there is provided a communication receiver comprising:

an input for receiving a modulated analog signal containing digital information;
a front end unit operable for performing analog-to-digital conversion, for performing demodulation and for performing timing control, and further operable for producing a demodulated complex-valued digital signal from the modulated analog signal;
a digital equalizer connected for receiving the demodulated complex-valued digital signal, comprising:

a first filter operable for receiving the demodulated complex-valued digital signal, said first filter with adaptive coefficients where adaptation is according to the following formula:

$$p_{n+1}[l] = p_n[l] + \Gamma_n(s_2[n]) \ s_1{}^*[n\text{-}l] \qquad l = 1, ..., L$$

where $p_n[l]$ is the $l$-th tap of the first filter after calculation of $n$ outputs, $p_n[0] = 1$, $s_1[n]$ is the input sequence to the first filter, $s_2[n]$ is the output of the first filter, and $\Gamma_n(\bullet)$ is a function whose parameters may depend upon a symbol index $n$;
a second filter connected to the first filter and operable for reducing the amount of noise and inter-symbol interference in the demodulated complex-valued digital signal without the use of training data; and
a symbol-to-bit converter connected to the second filter.

According to a second aspect of the invention there is provided a method of receiving a digital communication signal in the presence of inter-symbol interference, comprising the steps of:

receiving an analog signal modulated with digital information;
converting the analog signal to produce a digital signal;
multiplying the digital signal with sine and cosine signals to produce a complex-valued digital signal;
adaptively pre-equalizing the complex-valued digital signal to produce a pre-equalized complex-valued digital signal; where adaptation is according to the following formula:

$$p_{n+1}[l] = p_n[l] + \Gamma_n(s_2[n])s_1{}^*[n\text{-}l] \qquad l = 1, ..., L$$

adaptively equalizing the pre-equalized complex-valued signal to reduce the inter-symbol interference and to produce a corrected complex valued symbol signal; and
converting the corrected complex valued symbol signal to the digital information.

According to a third aspect of the invention there is provided a communication system, comprising:

a digital communication transmitter;
a communications medium; and
a digital communications receiver, comprising:

an input for receiving a modulated analog signal containing digital information
an analog-to-digital converter connected for producing a complex-valued digital signal from the modulated analog signal;
a demodulator connected for producing a demodulated complex-valued digital signal from the complex-valued digital signal;
a digital equalizer connected for receiving the demodulated complex-valued digital signal, comprising:

a first filter operable for receiving the demodulated complex-valued digital signal, said first filter with adaptive coefficients where adaptation is according to the following formula:

$$p_{n+1}[l] = p_n[l] + \Gamma_n(s_2[n])s_1{}^*[n\text{-}l] \qquad l = 1, ..., L$$

where $pn[l]$ is the $l$-th tap of the first filter after calculation of n outputs, $p_n[0] = 1$, $s_1[n]$ is the input sequence to the first filter, $s_2[n]$ is the output of the first filter, and $\Gamma_n(\bullet)$ is a function whose parameters may depend upon a symbol index $n$;
a second filter connected to the first filter and operable for reducing the amount of noise and inter-symbol interference in the demodulated complex-valued digital signal without the use of training data; and
a symbol-to-bit converter connected to the second filter.

The receiver of the present invention receives an analog signal modulated with digital information. The receiver converts the analog signal to a digital signal and demodulates the digital signal to recover the complex valued components of the transmitted digital signal. The complex valued components are low pass filtered and passed through an adaptive pre-equalizer filter to reduce eigen value spread correlation. The filtered complex valued signal is then subjected to a decision feedback equalizer which operates using a series of adaptive filters to additionally remove artifacts of inter-symbol interference. The resulting filtered and equalized complex valued signal is the converted to a digital signal to recover the digital information.

BRIEF DESCRIPTION OF THE DRAWINGS

Figure 1 depicts a digital communications system which employs the invention in a preferred embodiment.
Figure 2 describes the transmitter in the preferred embodiment of Figure 1.
Figure 3 describes the structure of the receiver in the preferred embodiment.
Figure 4 describes the operation of the pre-equalizer filter unit of the receiver in the preferred embodiment.
Figure 5 describes operation of the DFE (Decision Feedback Equalizer) in the receiver of the preferred embodiment.

DETAILED DESCRIPTION OF PREFERRED EMBODIMENTS

In the following detailed description of the preferred embodiments, reference is made to the accompanying drawings which form a part hereof, and in which is shown by way of illustration specific preferred embodiments in which the inventions may be practiced. These embodiments are described in sufficient detail to enable those skilled in the art to practice the invention, and it is to be understood that other embodiments may be utilized and that structural, logical and electrical changes may be made without departing from the scope of the present inventions. The following detailed description is, therefore, not to be taken in a limiting sense, and the scope of the present inventions is defined only by the appended claims.

Reference is made to Figure I which illustrates a typical application of a digital communications system operating over UTP (Unshielded Twisted Pair) copper cables plant 102 or another communication medium such as coaxial cable. The present invention is applicable to many types of communication mediums, and in particular to a digital subscriber loop of a telephone network or a coaxial cable television infrastructure. The system comprises a transmitter 101 that receives a sequence 104 of data bits b[n], and outputs a signal x(t) to the cable. A wired communications medium 102, such as a copper cable plant, connects the transmitter 101 to the blind receiver 103. The blind receiver 103 receives a signal y(t) from the communications medium 102 and outputs a sequence of detected digital data bits b[n] 105.

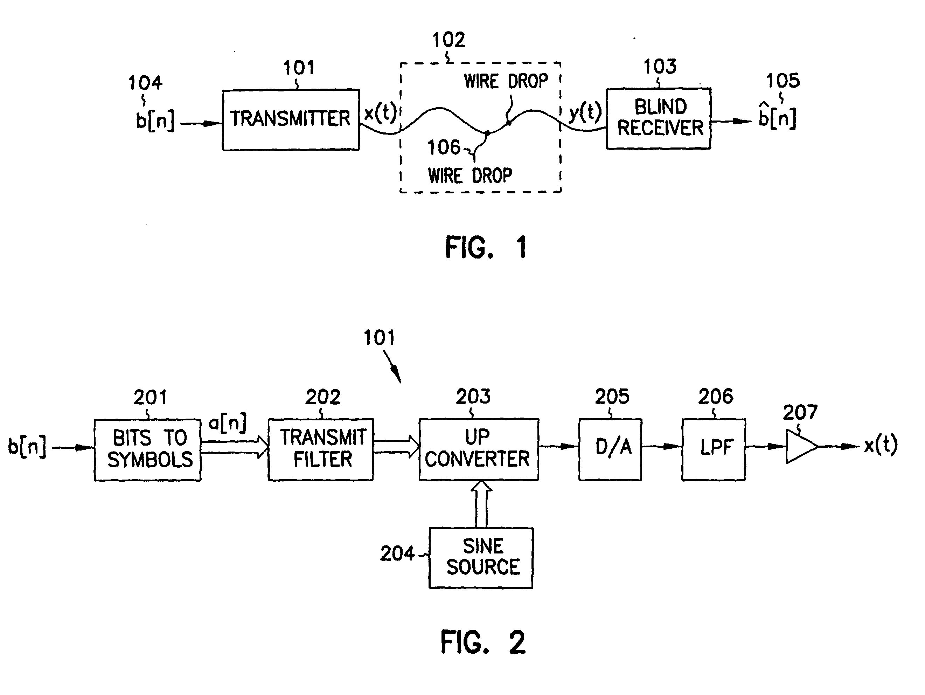

The communications medium or cable plant may have one or more unterminated wire drops 106, as illustrated in Figure 1, and these wire drops may cause severe reflections that distort the signal and introduce significant inter-symbol interference (ISI).

Reference is made now to Figure 2, which describes the structure of the transmitter 101. In figure 2, the single-lined arrows indicate the propagation of real valued signals and the double-lined arrows indicate the propagation of complex valued signals. Real valued signals are a subset of complex valued signals and thus whenever the term "complex valued" is used herein, it encompassed either imaginary or real valued signals or the combination of the two which is a complex valued signals. The transmitter 101 operates according to a general approach of linear transmission that particularly include any one of PAM (Pulse Amplitude Modulation), QAM (Quadature Amplitude Modulation), PSK (Phase Shift Keying), CAP (Carrierless AM-PM), and NRZ (Non-Return to Zero) transmission methods, among others. The input data bits sequence b[n] is converted to a sequence of I-Q complex valued symbols, a[n], by a bit-to-symbol conversion unit 201, that may comprise a scrambler, a differential encoder, a trellis or a block FEC (Forward Error Correction) encoder, a CRC error protection encoder, a framer, a shell mapper, and/or protocol layer units.

The sequence a[n] is then fed to a cascade of transmission filter 202, an up-converter 203, where it is multiplied by sine and cosine sequences that are generated in the sine wave source 204, a Digital to Analog (D/A) converter 205, an analog LPF (Low Pass Filter) 206 whose cutoff frequency is designed to reject aliasing effects of the D/A, and an amplifier 207. The output of the transmitter is the analog signal x(t).

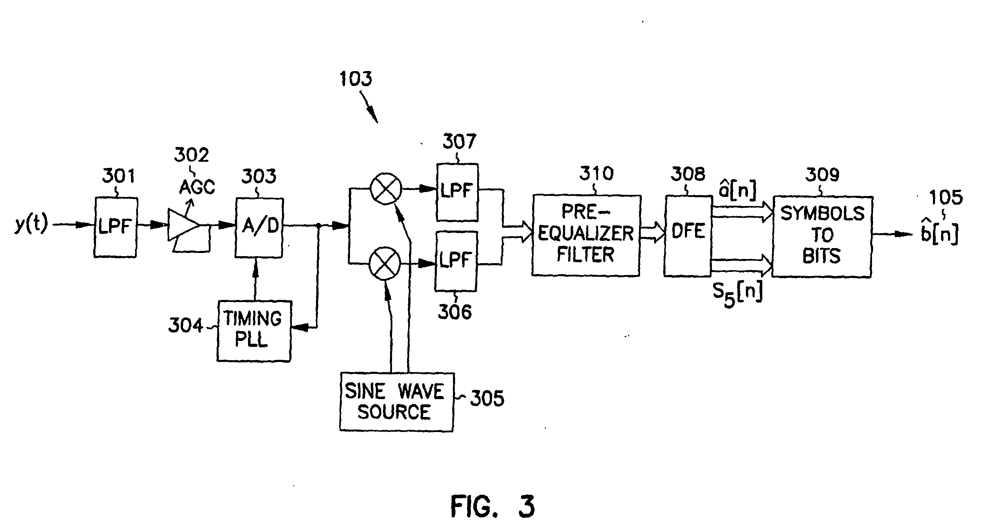

Reference is now made to Figure 3 which illustrates the structure of the blind receiver 103. The input to the blind receiver is an analog signal y(t) that has propagated through the wired communications medium 102, such as a copper cable plant. This signal may suffer from severe reflections and linear distortions and it may contain a high level of noise and interference components due to e.g. narrow-band radio transmissions which occupy the same frequency band of the signal y(t).

The receiver input signal is low-pass filtered by the LPF 301 which is designed to combat sampling aliasing effects, then it is amplified by an amplifier 302 whose gain is automatically adjusted with an Automatic Gain Control (AGC) to exploit the dynamic range of sampler, and then the signal is sampled by Analog to Digital converter (A/D) 303. The sampling phase of the A/D is adaptively controlled by a timing PLL (phase locked loop) 304, which adjusts the sampling phase so that the power of the A/D output is maximized. Those skilled in the art will readily recognize that the timing PLL 304 may alternatively employ other conventional timing methods, such as decision directed timing.

The A/D output sequence is then down-converted by multiplying it with sine and cosine sequences that are synthesized in a sine wave source 305, and the resulting I and Q components are low pass filtered by the LPFs 306 and 307. Both LPFs 306 and 307 are designed to remove the demodulation image, to remove out-of-band signals, and to match the response frequency of the cascade of the transmission pulse response of transmit filter 202 of a typical cable plant or other communication medium 102 upon which the system operates.

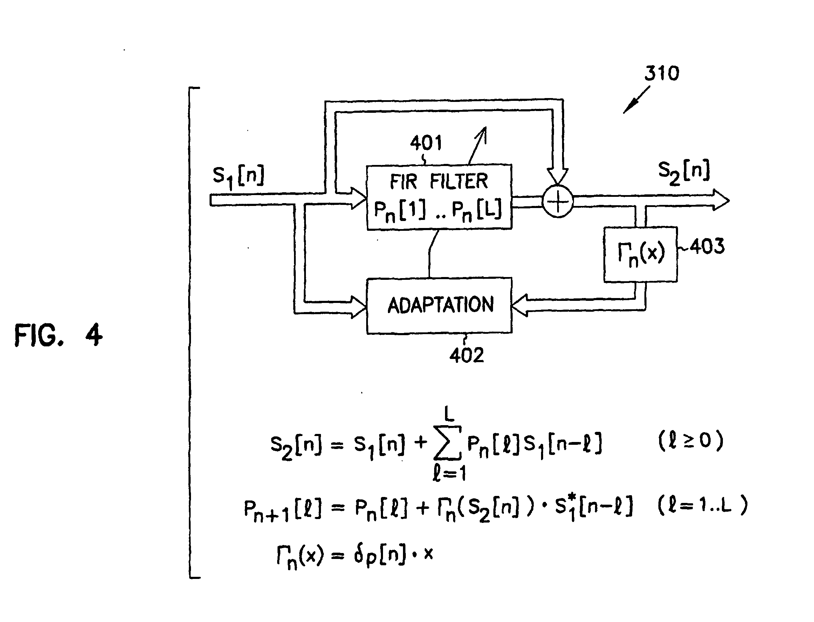

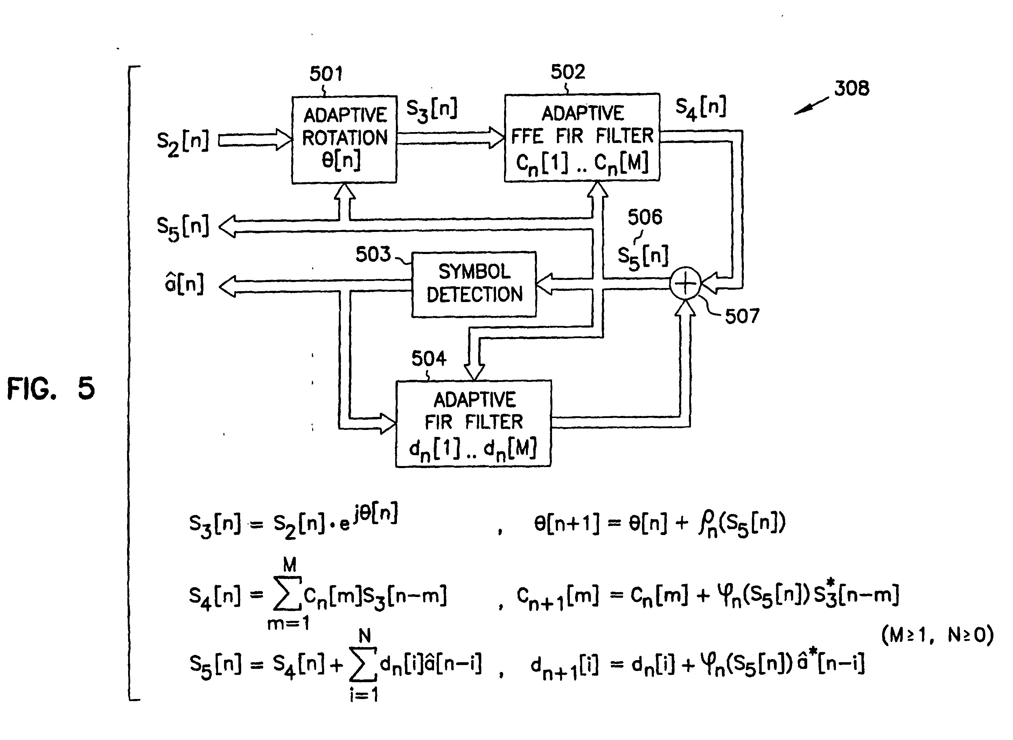

The LPF units' outputs are then processed by a pre-equalizer filter unit 310, whose operation is described below in conjunction with Figure 4, and a Decision Feedback Equalizer (DFE) unit 308, whose operation is described below in conjunction with Figure 5. The output of the DFE unit 308 is a sequence of detected I-Q symbols â[n] and an equalized sequence $s_5[n]$. These sequences are then processed by a symbol-to-bits conversion unit 309 that performs the inverse function of the bits-to-symbols conversion unit 201 and may employ a descrambler, differential decoder, FEC decoders, deframer, shell demapper, and/or a protocol layer decoder. The output of this unit is a sequence of the detected data bits b[n] 105.

Figure 4 illustrates the pre-equalizer filter unit 310. The input sequence of the unit, $s_1[n]$ is filtered by a digital FIR (Finite Impulse Response) filter 401 with L taps $p_n[1]...p_n[L]$ ($L \geq 0$) where $p_n[l]$ denotes the $l$-th tap after n iterations. The taps of the filter are adaptively adjusted by an adaptation unit 402. The adaptation rule is:

$$p_{n+1}[l] = p_n[l] + \Gamma_n(s_2[n])s^*_1[n\text{-}l] \qquad l = 1 ... L$$

where $s_2[n]$ is the output of the FIR filter 401, and where $\Gamma_n(x)$ is a possibly nonlinear function 403 whose parameters may vary with the iteration index $n$. A recommended class of $\Gamma$ function is:

$$\Gamma_n(x) = \delta_p[n] \cdot x$$

where $\delta_p[n]$ $n = 1,2,...$ is a sequence of step sizes. The signal undergoes the following transformation:

$$s_2[n] = s_1[n] + \sum_{l=1}^{L} p_n[l]s_1[n\text{-}l] \quad (L \geq 0)$$

The input signal for the pre-equalization filter unit 310 is denoted $s_1[n]$ in Figure 4 and is routed to the FIR filter 401, the adaptation unit 402 and to summation circuit 404. $s_1[n]$ is combined with the output of the adaptive FIR filter 401 to produce the output signal $s_2[n]$ of the pre-equalization filter unit 310. The non-linear circuit 403 modifies the $s_2[n]$ signal to provide the feedback to adjusting the taps if adaptive FIR filter 401.

Figure 5 illustrates the DFE (Decision Feedback Equalizer). The DFE's input sequence $s_2[n]$ is first rotated by an adaptive rotator 501, by an angle $\theta[n]$. The rotated sequence is then filtered by an FFE (Feed Forward Equalizer) FIR filter 502 whose taps' values are $c_n[1]..c_n[M]$ ($M \geq 1$), to produce output signal $s_3[n]$. Signal $s_3[n]$ is then summed 507 with the output of an adaptive FIR filter 504 whose taps are $d_n[1]..d_n[N]$, $N \geq 0$, and which is driven by the sequence of detected symbols â[n]. The result of this summation is equalized sequence $s_5[n]$, 506. The sequence 506 is fed to a symbol detector 503 that employs a memoryless nearest neighbor decision rule, based on the transmitted symbols' I-Q constellation to generate the sequence â[n]. We note that in this preferred embodiment, a single memory less decision rule is employed. However, the present invention can be employed in a receiver that employs a more accurate detection scheme such as an approximate nearest sequence detector which is the maximum likelihood sequence estimator when the noise of the input of unit 503 has a Gaussian distribution.

The parameters of units 501, 502 and 504 are jointly updated by $S_5[n]$ to combat ISI (Inter-Symbol Interference) and noise. The adaptation scheme is the following:

$$\theta[n + 1] = \theta[n] + \rho_n(s_5[n])$$

$$c_{n+1}[m] = c_n[m] + \varphi_n(s_5[n])s_3^*[n - m] \qquad m = 1...M$$

$$d_{n+1}[i] = d_n[i] + \Psi_n(s_5[n]â^*[n - i] \qquad i = 1...N$$

where $\rho_n(x)$, $\varphi_n(x)$, and $\Psi_n(x)$ are possibly nonlinear complex valued scalar function whose parameters may depend on the iteration index n, and $M \geq 1$, $N \geq 0$.

The adaptation functions in this embodiment are:

$$\varphi_n(x) = \begin{cases} \delta_c[n](x - \hat{a}(x)) & n > T_2^c \\ \delta_c[n]\left(|x|^2 - k_1\right)x & T_1^c \le n < T_2^c \\ \delta_c[n]\left(\mathrm{Re}^2(x) - k_2\right)\mathrm{Re}(x) & n < T_1^c \end{cases}$$

$$\rho_n(x) = \begin{cases} \delta_\theta[n]\left(\mathrm{Re}^2(x) - k_2\right)\mathrm{Re}(x)\mathrm{Im}(x) & n < T_1^\theta \\ \delta_\theta[n]\mathrm{Im}\left(\hat{a}(x)x^*\right) & n \ge T_1^\theta \end{cases}$$

$$\Psi_n(x) = \begin{cases} \delta_d[n](x - \hat{a}(x)) & n > T_2^d \\ \delta_d[n]\left(|x|^2 - k_1\right)x & T_1^d \le n < T_2^d \\ \delta_d[n]\left(\mathrm{Re}^2(x) - k_2\right)\mathrm{Re}(x) & n < T_1^d \end{cases}$$

where $\delta_c[n]$, $\delta_d[n]$ and $\delta_\theta[n]$, $n = 1, 2, ...,$ are sequences of real-valued step sizes, where $k_1$ and $k_2$ are real valued scalars, and where Re(-) and Im(-) denote the real part and the imaginary part of a complex scalar, and where $\hat{a}(x)$ is the result of a memoryless nearest neighbor symbol detector whose input is x. $T_1^c$, $T_2^c$, $T_1^\theta$, $T_1^d$ and $T_2^d$ are positive scalars.

The sequences $s_1[n]...s_5[n]$, $\hat{a}[n]$ may be calculated at the symbols rate (T-spaced receiver). Alternatively $s_2[n]$, $s_3[n]$ and $s_4[n]$ may be calculated at a higher rate (Fractionally spaced receiver). The resulting outputs of units 501, 502 and 504 are described as follows:

$$s_3[n] = s_2[n] \cdot e^{j\theta[n]}$$

$$s_4[n] = \sum_{m=1}^{M} c_n[m]s_3[n-m]$$

$$s_5[n] = s_4[n] + \sum_{l=1}^{N} d_n[i]\,\hat{a}[n-l]$$

CONCLUSION

Although specific embodiments have been illustrated and described herein, it will be appreciated by those of ordinary skill in the art that any arrangement which is calculated to achieve the same purpose may be substituted for the specific embodiments shown. This patent is intended to cover any adaptations or variations of the present invention. Therefore, it is manifestly intended that this invention be limited only by the claims and the equivalents thereof.

**Claims**

1.  A communication receiver (103), comprising:

    an input for receiving a modulated analog signal (y(t)) containing digital information;
    a front end unit (303, 304) operable for performing analog-to-digital conversion, for performing demodulation
    and for performing timing control, and further operable for producing a demodulated complex-valued digital
    signal from the modulated analog signal;
    a digital equalizer connected for receiving the demodulated complex-valued digital signal, comprising:

    a first filter (310) operable for receiving the demodulated complex-valued digital signal, said first filter with
    adaptive coefficients where adaptation is according to the following formula:

    $$p_{n+1}[l] = p_n[l] + \Gamma_n(s_2[n])\, s_1^*[n\text{-}l] \qquad l = 1, ..., L$$

    where $p_n[l]$ is the $l$-th tap of the first filter after calculation of $n$ outputs, $p_n[0] = 1$, $s_1[n]$ is the input sequence
    to the first filter, $s_2[n]$ is the output of the first filter, and $\Gamma_n(\cdot)$ is a function whose parameters may depend
    upon a symbol index $n$;
    a second filter (308) connected to the first filter and operable for reducing the amount of noise and inter-
    symbol interference in the demodulated complex-valued digital signal without the use of training data; and
    a symbol-to-bit converter (309) connected to the second filter.

2.  The communication receiver according to claim 1,
    wherein the first filter (310) operates to reduce the eigenvalue spread of an input spectrum of the demodulated
    complex valued digital signal.

3.  The communication receiver according to claim 1,
    wherein the second filter (308) is further operable for reducing the amount of noise and inter symbol interference of the demodulated complex valued digital signal without training data.

4.  The communication receiver according to claim 1,
    wherein the second filter further includes a rotator for restoring the phase of the demodulated complex valued
    digital signal without the use of training data.

5.  The communication receiver according to claim 1,
    wherein the second filter further includes a nonlinear feedback network for removing the inter-symbol interference without the use of training data in the demodulated complex-valued digital signal.

6.  The communication receiver according to claim 1,
    wherein the first filter (310) further comprises an L-tap Finite-Impulse-Response (FIR) Filter (401), where L
    $\geq 1$, whose first tap is set to a fixed value, and the filter's taps are adjusted so that its output power is minimized.

7.  The communication receiver according to claim 1,
    wherein the second filter further comprises an M-tap FIR filter (502) whose taps are adjusted according to
    the following formula:

    $$c_{n+1}[m] = c_n[m] + \varphi_n(s_5[n])s_3^*[n\text{-}m] \qquad m = 1 ... M$$

    where $c_n[m]$ is the $m$-th tap of the second filter after calculation of n outputs, $s_3[n]$ is the input sequence to
    the second filter, $s_5[n]$ is the sum of the output of the second filter and a decision feedback filter, and $\varphi_n(\cdot)$ is a
    complex valued function, whose parameters may depend on the symbol index $n$.
    and the decision feedback filter is an N-tap backward FIR filter (504) whose taps are adjusted according to
    the following formula:

    $$d_{n+1}[i] = d_n[i] + \Psi_n(s_5[n])\hat{a}^*[n\text{-}i] \qquad i = 1 ... N$$

where $d_n[i]$ is the $i$-th tap of the decision feedback filter after calculation of $n$ outputs, $\hat{a}[n]$ is a sequence of detected data, and $\Psi_n(\cdot)$ is a complex valued function, whose parameters may depend on the symbol index $n$.

8. The communication receiver according to claim 7,
   wherein for some values of $n$:

$$\varphi_n(x) = \delta[n](Re^2(x) - k_2)Re(x)$$

where $Re(\text{-})$ denotes the real part of a complex number, $k_2$ is a scalar, and $\delta[n]$ $n = 1, 2, ...$ is a sequence of numbers.

9. The communication receiver according to claim 7,
   wherein for some values of $n$:

$$\varphi_n(x) = \delta[n](|x|^2 - k)(x)$$

where $k$ is a scalar, and $\delta(n)$ is a sequence of numbers.

10. The communication receiver according to claim 7,
    wherein for some values of $n$:

$$\varphi_n(x) = \delta[n](x - \hat{a}(x))$$

where $\hat{a}(x)$ is the result of a memoryless nearest neighbor symbol detector whose input is $x$, and $\delta[n]$ is a sequence of numbers.

11. The communication receiver according to claim 7,
    wherein for some values of $n$:

$$\Psi_n(x) = \delta[n](Re^2(x) - k_2)Re(x)$$

where $k_2$ is a scalar, and $\delta[n] = 1, 2, ...$ is a sequence of numbers.

12. The communication receiver according to claim 7,
    wherein for some values of $n$:

$$\Psi_n(x) = \delta[n](|x|^2 - k)(x)$$

where $k$ is a scalar, and $\delta[n]$ is a sequence of numbers.

13. The communication receiver according to claim 7,
    wherein for some values of $n$:

$$\Psi_n(x) = \delta[n](x - \hat{a}(x))$$

where $\hat{a}(x)$ is the result of a memoryless nearest neighbor symbol detector whose input is $x$, and $\delta[n]$ is a sequence of numbers.

14. The communication receiver according to claim 1, wherein the second filter (308) further comprises:

   an adaptive rotator connected to receive the demodulated complex valued digital signal;
   an adaptive feed forward equalizer finite impulse response filter connected to the adaptive rotator;

a signal summation circuit connected to the adaptive feed forward equalizer finite impulse response filter and to an adaptive finite impulse response filter, the output of which is connected to update the adaptive rotator, the adaptive feed forward equalizer finite impulse response filter and the adaptive finite impulse response filter; a symbol detector connected to the signal summation circuit and the symbol-to-bit convertor; and the adaptive finite impulse response filter connected to the symbol detector and operable for adapting to the summation result of the signal summation circuit.

15. The communication receiver according to any of claims 1-14, wherein the modulated analog signal is a modulation type selected from the group consisting of PAM (Pulse Amplitude Modulation), QAM (Quadature Amplitude Modulation), P8K (Phase Shift Keying), CAP (Carrierless AM-PM), NRZ (Non-Return to Zero), offset-QPSK, and $\pi$/4-QPSK.

16. A method of receiving a digital communication signal in the presence of inter-symbol interference, comprising the steps of:

receiving an analog signal modulated with digital information;
converting the analog signal to produce a digital signal;
multiplying the digital signal with sine and cosine signals to produce a complex-valued digital signal;
adaptively pre-equalizing the complex-valued digital signal to produce a pre-equalized complex-valued digital signal; where adaptation is according to the following formula:

$$p_{n+1}[l] = P_n[l] + \Gamma_n(s_2[n])s_1{}^*[n-l] \qquad l = 1, ..., L$$

adaptively equalizing the pre-equalized complex-valued signal to reduce the inter-symbol interference and to produce a corrected complex valued symbol signal; and
converting the corrected complex valued symbol signal to the digital information.

17. The method according to claim 16,
wherein the step of adaptively pre-equalizing further comprises the steps of:

adaptively filtering the complex-valued digital signal with an adaptive filter to produce a filtered complex-valued digital signal;
summing the complex-valued digital signal with the filtered complex-valued digital signal to produce the pre-equalized complex-valued digital signal;
producing a non-linear response to the pre-equalized complex-valued signal; and
modifying taps of the adaptive filter in response to the non-linear response to the pre-equalized complex-valued signal and in response to the complex-valued digital signal.

18. A method according to claim 16,
wherein the step of adaptively equalizing further comprises the steps of:

adaptively rotating the pre-equalized complex-valued signal to produce a rotated complex valued signal;
adaptively filtering the rotated complex valued signal to produce a filtered rotated complex valued signal;
summing the filtered rotated complex valued signal with an adapted filter output to produce an adapted complex-valued signal;
detecting the symbols in the adapted complex-valued signal to produce the corrected complex valued symbol signal; and
producing the adapted filter output by adaptively filtering the corrected complex valued symbol signal.

19. A communication system, comprising:

a digital communication transmitter (101);
a communications medium (102); and
a digital communications receiver (103), comprising:

an input for receiving a modulated analog signal containing digital information
an analog-to-digital converter (303) connected for producing a complex-valued digital signal from the modulated analog signal;

a demodulator connected for producing a demodulated complex-valued digital signal from the complex-valued digital signal;

a digital equalizer connected for receiving the demodulated complex-valued digital signal, comprising:

a first filter (310) operable for receiving the demodulated complex-valued digital signal, said first filter with adaptive coefficients where-adaptation is according to the following formula:

$$p_{n+1}[l] = p_n[l] + \Gamma_n(s_2[n]) \, s_1{}^*[n-l] \qquad l = 1, ..., L$$

where $p_n[l]$ is the $l$-th tap of the first filter after calculation of n outputs, $p_n[0] = 1$, $s_1[n]$ is the input sequence to the first filter, $s_2[n]$ is the output of the first filter, and $\Gamma_n(\cdot)$ is a function whose parameters may depend upon a symbol index $n$;

a second filter connected to the first filter and operable for reducing the amount of noise and inter-symbol interference in the demodulated complex-valued digital signal without the use of training data; and

a symbol-to-bit converter connected to the second filter.

**20.** The communication receiver according to any of claims 1-14,
wherein the receiver is used with a digital subscriber loop of a telephone network.

**21.** The communication receiver according to any of claims 1-14,
wherein the receiver is used with a coaxial cable television infrastructure.

**Patentansprüche**

**1.** Kommunikationsempfänger (103) mit:

einem Eingang zum Empfangen eines modulierten analogen Signals (y(t)), welches digitale Information enthält;

einer Front-End-Vorrichtung (303, 304), welche für ein Durchführen einer Analogdigitalumwandlung, für ein Durchführen einer Demodulation und für ein Durchführen einer Taktsteuerung geeignet ist und ferner für ein Erzeugen eines demodulierten komplexen digitalen Signals aus dem modulierten analogen Signal geeignet ist;

einem digitalen Entzerrer zum Empfangen des demodulierten komplexen digitalen Signals mit:

einem ersten Filter (310), welcher geeignet ist, das demodulierte komplexe digitale Signal zu empfangen, wobei der erster Filter adaptive Koeffizienten aufweist, wobei eine Adaption gemäß der folgenden Formel lautet:

$$p_{n+1}[l] = p_n[l] + \Gamma_n(s_2[n]) s_1{}^*[n-l] \qquad l = 1, ..., L$$

worin $p_n[l]$ der $l$-te Tap des ersten Filters nach einer Berechnung von $n$ Ausgaben ist, $p_n[0]=1$, $s_1[n]$ die Eingabesequenz an den ersten Filter ist, $s_2[n]$ die Ausgabe des ersten Filters ist, und $\Gamma_n(\cdot)$ eine Funktion ist, deren Parameter von einem Symbolindex $n$ abhängen können;

einem zweiten Filter (308), welcher mit dem ersten Filter verbunden ist und geeignet ist, die Menge an Rauschen und Zwischensymbolinterferenz in dem demodulierten komplexen digitalen Signal ohne die Verwendung von Trainingsdaten zu reduzieren; und

einem mit dem zweiten Filter verbundenen Symbol-zu-Bit-Umwandler (309).

**2.** Kommunikationsempfänger gemäß Anspruch 1, wobei der erste Filter (310) ferner betrieben wird, um den Eigenwertbereich eines Eingangsspektrums des demodulierten komplexen digitalen Signals zu reduzieren.

3. Kommunikationsempfänger gemäß Anspruch 1, wobei der zweite Filter (308) ferner geeignet ist, die Menge an Rauschen und Zwischensymbolinterferenz des demodulierten komplexen digitalen Signals ohne Trainingsdaten zu reduzieren.

4. Kommunikationsempfänger gemäß Anspruch 1, wobei der zweite Filter ferner einen Rotator zum Wiederherstellen der Phase des demodulierten komplexen digitalen Signals ohne die Verwendung von Trainingsdaten einschließt.

5. Kommunikationsempfänger gemäß Anspruch 1, wobei der zweite Filter ferner ein nichlineares Rückmeldungsnetzwerk zum Entfemen der Zwischensymbolinterferenz ohne die Verwendung von Trainingsdaten in dem demodulierten komplexen digitalen Signal einschließt.

6. Kommunikationsempfänger gemäß Anspruch 1, wobei der erste Filter (310) ferner einen L-Tap Filter mit endlicher Impulsantwort (FIR = Finite-Impulse-Response) (401) mit $L \geq 1$ aufweist, dessen erster Tap auf einen festen Wert gesetzt wird, und die Taps des Filters so angepasst werden, dass seine Ausgangsleistung minimiert wird.

7. Kommunikationsempfänger gemäß Anspruch 1, wobei der zweite Filter einen M-Tap FIR Filter (502) aufweist, dessen Taps gemäß der folgenden Formel angepasst werden:

$$c_{n+1}[m] = c_n[m] + \varphi_n(s_5[n])s_3^*[n-m] \qquad m = 1, ..., M$$

worin $c_n[m]$ der m-te Tap des zweiten Filters nach einer Berechnung von $n$ Ausgaben ist, $s_3[n]$ die Eingabesequenz an den zweiten Filter ist, $s_5[n]$ die Summe der Ausgabe des zweiten Filters und eines Entscheidung-Rückmeldung-Filters ist, und $\varphi_n(\bullet)$ eine komplexe Funktion ist, deren Parameter von einem Symbolindex $n$ abhängen können; und der Entscheidung-Rückmeldung-Filter ein N-Tap rückwärts FIR Filter (504) ist, dessen Taps gemäß der folgenden Formel angepasst werden:

$$d_{n+1}[i] = d_n[i] + \Psi_n(s_5[n])\ \hat{a}^*[n-i] \qquad i = 1, ..., N$$

worin $d_n[i]$ der i-te Tap des Entscheidung-Rückmeldung-Filters nach einer Berechnung von $n$ Ausgaben ist, $\hat{a}[n]$ eine Sequenz detektierter Daten ist, und $\Psi_n(\bullet)$ eine komplexe Funktion ist, deren Parameter von einem Symbolindex $n$ abhängen können.

8. Kommunikationsempfänger gemäß Anspruch 7, wobei für einige Werte von n gilt:

$$\varphi_n(x) = \delta[n](\text{Re}^2(x) - k_2)\text{Re}(x)$$

worin Re (-) den Realteil einer komplexen Zahl anzeigt, $k_2$ ein Skalar ist und $\delta[n]$ $n$ = 1,2,... eine Sequenz von Zahlen ist.

9. Kommunikationsempfänger gemäß Anspruch 7, wobei für einige Werte von $n$ gilt:

$$\varphi_n(x) = \delta[n](|x|^2 - k)(x)$$

worin k ein Skalar ist und $\delta(n)$ eine Sequenz von Zahlen ist.

10. Kommunikationsempfänger gemäß Anspruch 7, wobei für einige Werte von $n$ gilt:

$$\varphi_n(x) = \delta[n](x - \hat{a}(x))$$

worin ä(x) das Ergebnis eines speicherlosen nächster-Nachbar-Symboldetektors ist, dessen Eingabe x ist, und $\delta[n]$ eine Sequenz von Zahlen ist.

11. Kommunikationsempfänger gemäß Anspruch 7, wobei für einige Werte von $n$ gilt:

$$\Psi_n(x) = \delta[n](Re^2(x) - k_2)Re(x)$$

worin $k_2$ ein Skalar und $\delta[n]$ $n$ = 1,2,... eine Sequenz von Zahlen ist.

**12.** Kommunikationsempfänger gemäß Anspruch 7, wobei für einige Werte von $n$ gilt:

$$\Psi_n(x) = \delta[n](|x|^2 - k)(x)$$

worin k ein Skalar und $\delta[n]$ eine Sequenz von Zahlen ist.

**13.** Kommunikationsempfänger gemäß Anspruch 7, wobei für einige Werte von $n$ gilt;

$$\Psi_n(x) = \delta[n](x - \hat{a}(x))$$

worin ä(x) das Ergebnis eines speicherlosen nächster-Nachbar-Symboldetektors ist, dessen Eingabe x ist, und $\delta[n]$ eine Sequenz von Zahlen ist.

**14.** Kommunikationsempfänger gemäß Anspruch 1, wobei der zweite Filter (308) ferner aufweist:

einen adaptiven Rotator zum Empfangen des demodulierten komplexen digitalen Signals;

einen adaptiven Vorwärtsentzerrer-Filter mit endlicher Impulsantwort, welcher mit dem adaptiven Rotator verbunden ist;

eine Signalsummierungsschaltung, welche mit dem adaptiven Vorwärtsentzerrer-Filter mit endlicher Impulsantwort und mit einem adaptiven Filter mit endlicher Impulsantwort verbunden ist, dessen Ausgang verbunden ist, um den adaptiven Rotator, den adaptiven Vorwärtsentzerrer-Filter mit endlicher Impulsantwort und den adaptiven Filter mit endlicher Impulsantwort zu aktualisieren;

einen Symboldetektor, der mit der Signalsummierungsschaltung und dem Symbol-zu-Bit-Umwandler verbunden ist; und

den adaptiven Filter mit endlicher Impulsantwort, der mit dem Symboldetektor verbunden und geeignet ist, sich an das Summationsergebnis der Signalsummierungsschaltung anzupassen.

**15.** Kommunikationsempfänger gemäß einem der Ansprüche 1 bis 14, wobei das modulierte analoge Signal ein Modulationstyp ist, der aus der Gruppe ausgewählt ist, die aus PAM (Pulse Amplitude Modulation), QAM (Quadature Amplitude Modulation), P8K (Phase Shift Keying), CAP (Carrierless AM-PM), NRZ (Non-Return to Zero), offset-QPSK und $\pi$/4-QPSK besteht.

**16.** Verfahren zum Empfangen eines digitalen Kommunikationssignals in Gegenwart von Zwischensymbolinterferenz, die Schritte aufweisend:

Empfangen eines analogen, mit digitaler Information modulierten Signals;
Umwandeln des analogen Signals, um ein digitales Signal zu erzeugen;
Vervielfachen des digitalen Signals mit Sinus- und Kosinussignalen, um ein komplexes digitales Signal zu erzeugen;
adaptives Vor-Entzerren des komplexen digitalen Signals, um ein vor-entzerrtes komplexes digitales Signal zu erzeugen, wobei die Adaption gemäß der folgenden Formel lautet:

$$p_{n+1}[l] = p_n[l] + \Gamma_n(s_2[n])s_1^*[n-l] \qquad l = 1, ..., L$$

adaptives Entzerren des vor-entzerrten komplexen Signals, um die Zwischensymbolinterferenz zu reduzieren und ein korrigiertes komplexes Symbolsignal zu erzeugen; und

Umwandeln des korrigierten komplexen Symbolsignals zu der digitalen Information.

**17.** Verfahren gemäß Anspruch 16, wobei der Schritt des adaptiven Vor-Entzerrens ferner die Schritte aufweist:

adaptives Filtern des komplexen digitalen Signals mit einem adaptiven Filter, um ein gefiltertes komplexes digitales Signal zu erzeugen;
Summieren des komplexen digitalen Signals und des gefilterten komplexen digitalen Signals, um das vor-entzerrte komplexe digitale Signal zu erzeugen;
Erzeugen einer nichtlinearen Antwort auf das vor-entzerrte komplexe Signal; und
Modifizieren der Taps des adaptiven Filters in Erwiderung auf die nichtlineare Antwort auf das vor-entzerrte komplexe Signal und in Erwiderung auf das komplexe digitale Signal.

**18.** Verfahren gemäß Anspruch 16, wobei der Schritt des adaptiven Entzerrens ferner die Schritte aufweist:

adaptives Rotieren der vor-entzerrten komplexen Signale, um ein rotiertes komplexes Signal zu erzeugen;
adaptives Filtern des rotierten komplexen Signals, um ein gefiltertes rotiertes komplexes Signal zu erzeugen;
Summieren des gefilterten rotierten komplexen Signals mit einer adaptiven Filterausgabe, um ein adaptiertes komplexes Signal zu erzeugen;
Detektieren des Symbols in dem adaptierten komplexen Signal, um das korrigierte komplexe Symbolsignal zu erzeugen; und
Erzeugen der adaptiven Filterausgabe durch adaptives Filtern des korrigierten komplexen Symbolsignals.

**19.** Kommunikationssystem mit:

einem digitalen Kommunikationssender (101);

einem Kommunikationsmedium (102); und

einem digitalen Kommunikationsempfänger (103) mit:

einem Eingang zum Empfangen eines modulierten analogen Signals, welches digitale Information enthält;

einem Analogdigitalwandler (303) zum Erzeugen eines komplexen digitalen Signals aus dem modulierten analogen Signal;

einem Demodulator zum Erzeugen eines demodulierten komplexen digitalen Signals aus dem komplexen digitalen Signal;

einem digitalen Entzerrer zum Empfangen des demodulierten komplexen digitalen Signals mit:

einem ersten Filter (310),welcher geeignet ist, das demodulierte komplexe digitale Signal zu empfangen, wobei der erster Filter adaptive Koeffizienten aufweist, wobei eine Adaption gemäß der folgenden Formel lautet:

$$p_{n+1}[l] = p_n[l] + \Gamma_n(s_2[n])s_1{}^*[n\text{-}l] \qquad l = 1, ..., L$$

worin $p_n[l]$ der $l$-te Tap des ersten Filters nach einer Berechnung von $n$ Ausgaben ist, $p_n[0]{=}1$, $s_1[n]$ die Eingabesequenz an den ersten Filter ist, $s_2[n]$ die Ausgabe des ersten Filters ist, und $\Gamma_n(\bullet)$ eine Funktion ist, deren Parameter von einem Symbolindex $n$ abhängen können;

einem zweiten Filter, welcher mit dem ersten Filter verbunden ist und geeignet ist, die Menge an Rauschen und Zwischensymbolinterferenz in dem demodulierten komplexen digitalen Signal ohne die Verwendung von Trainingsdaten zu reduzieren; und

einem mit dem zweiten Filter verbundenen Symbol-zu-Bit-Umwandler.

**20.** Kommunikationsempfänger gemäß einem der Ansprüche 1 bis 14, wobei der Empfänger mit einer digitalen Teilnehmer-Schleife eines Telefonnetzwerkes verwendet wird.

21. Kommunikationsempfänger gemäß einem der Ansprüche 1 bis 14, wobei der Empfänger mit einer Koaxialkabel-Fernseh-Infrastruktur verwendet wird.

**Revendications**

1. Récepteur de communication (103), comprenant :

une entrée pour recevoir un signal analogique modulé (y(t)) contenant des informations numériques;
une unité frontale (303, 304) utilisable pour exécuter une conversion analogique - numérique, pour exécuter une démodulation et pour exécuter un contrôle de synchronisation, et utilisable en outre pour produire un signal numérique à valeur complexe démodulé à partir du signal analogique modulé;
un égaliseur numérique connecté pour recevoir le signal numérique à valeur complexe démodulé, comprenant:

un premier filtre (310) utilisable pour recevoir le signal numérique à valeur complexe démodulé, ledit premier filtre présentant des coefficients adaptatifs, dans lequel une adaptation est réalisée selon la formule suivante:

$$p_{n+1}[l] = p_n[l] + \Gamma_n(s_2[n])s_\ell^*[n\text{-}l] \qquad \ell = 1, ..., L$$

où $p_n[\ell]$ est la $\ell^{\text{ième}}$ prise du premier filtre après le calcul de $n$ sorties, $p_n[0] = 1$, $s_\ell[n]$ est la séquence d'entrée au premier filtre, $s_2[n]$ est la sortie du premier filtre, et $\Gamma_n(\bullet)$ est une fonction dont les paramètres peuvent dépendre d'un indice de symbole $n$;
un deuxième filtre (308) connecté au premier filtre et utilisable pour réduire la quantité de bruit et l'interférence inter-symbole dans le signal numérique à valeur complexe démodulé sans utiliser de données d'instruction;
un convertisseur symbole - bit (309) connecté au deuxième filtre.

2. Récepteur de communication selon la revendication 1, dans lequel le premier filtre (310) fonctionne pour réduire la dispersion de valeur propre d'un spectre d'entrée du signal numérique à valeur complexe démodulé.

3. Récepteur de communication selon la revendication 1, dans lequel le deuxième filtre (308) est en outre utilisable pour réduire la quantité de bruit et l'interférence inter-symbole du signal numérique à valeur complexe démodulé sans données d'apprentissage.

4. Récepteur de communication selon la revendication 1, dans lequel le deuxième filtre comprend en outre un rotateur pour rétablir la phase du signal numérique à valeur complexe démodulé sans utiliser de données d'apprentissage.

5. Récepteur de communication selon la revendication 1, dans lequel le deuxième filtre comprend en outre un réseau de rétroaction non linéaire pour supprimer l'interférence inter-symbole sans utiliser de données d'apprentissage dans le signal numérique à valeur complexe démodulé.

6. Récepteur de communication selon la revendication 1, dans lequel le premier filtre (310) comprend en outre un Filtre à Réponses par Impulsions Finies (FIR) à L prises (401), où $L \geq 1$, dont la première prise est réglée à une valeur fixe, et les prises du filtre sont réglées de telle sorte que sa puissance de sortie soit minimisée.

7. Récepteur de communication selon la revendication 1, dans lequel le deuxième filtre comprend un filtre FIR à M prises (502) dont les prises sont réglées selon la formule suivante:

$$c_{n+1}[m] = c_n[m] + \varphi_n(s_5[n])s_3^*[n\text{-}m] \qquad m = 1, ..., M$$

où $c_n[m]$ est la $m^{\text{ième}}$ prise du deuxième filtre après le calcul de $n$ sorties, $s_3[n]$ est la séquence d'entrée au deuxième filtre, $s_5[n]$ est la somme de la sortie du deuxième filtre et d'un filtre de rétroaction de décision, et $\varphi_n(\bullet)$ est une fonction à valeur complexe dont les paramètres peuvent dépendre de l'indice de symbole $n$;

et le filtre de rétroaction de décision est un filtre FIR arrière à N prises (504) dont les prises sont réglées selon la formule suivante:

$$d_{n+1}[i] = d_n[i] + \Psi_n(s_5[n])\hat{a}^*[n-i] \qquad i = 1, ..., N$$

où $d_n[i]$ est la $i^{\text{ème}}$ prise du filtre de rétroaction de décision après le calcul de $n$ sorties, $\hat{a}[n]$ est une séquence de données détectées, et $\Psi_n(\bullet)$ est une fonction à valeur complexe dont les paramètres peuvent dépendre de l'indice de symbole $n$.

8.  Récepteur de communication selon la revendication 7, dans lequel, pour certaines valeurs de n:

$$\varphi_n(x) = \delta[n](\text{Re}^2(x)-k_2)\text{Re}(x)$$

où $Re(-)$ désigne la partie réelle d'un nombre complexe, $k_2$ est une grandeur scalaire, et $\delta[n]$ $n = 1, 2, ...$ est une séquence de nombres.

9.  Récepteur de communication selon la revendication 7, dans lequel, pour certaines valeurs de n:

$$\varphi_n(x) = \delta[n](|x|^2 - k)\,(x)$$

où k est une grandeur scalaire, et $\delta[n]$ est une séquence de nombres.

10.  Récepteur de communication selon la revendication 7, dans lequel, pour certaines valeurs de n:

$$\varphi_n(x) = \delta[n](x-\hat{a}(x))$$

où $\hat{a}(x)$ est le résultat d'un détecteur de symbole voisin le plus proche sans mémoire dont l'entrée est $x$, et $\delta[n]$ est une séquence de nombres.

11.  Récepteur de communication selon la revendication 7, dans lequel, pour certaines valeurs de n:

$$\Psi_n(x) = \delta[n](\text{Re}^2(x) - k_2)\text{Re}(x)$$

où $k_2$ est une grandeur scalaire, et $\delta[n] = 1, 2, ...$ est une séquence de nombres.

12.  Récepteur de communication selon la revendication 7, dans lequel, pour certaines valeurs de n:

$$\Psi_n(x) = \delta[n](|x|^2 - k)\,(x)$$

où $k$ est une grandeur scalaire, et $\delta[n]$ est une séquence de nombres.

13.  Récepteur de communication selon la revendication 7, dans lequel, pour certaines valeurs de n:

$$\Psi_n(x) = \delta[n](x-\hat{a}(x))$$

où $\hat{a}(x)$ est le résultat d'un détecteur de symbole voisin le plus proche sans mémoire dont l'entrée est $x$, et $\delta[n]$ est une séquence de nombres.

14.  Récepteur de communication selon la revendication 1, dans lequel le deuxième filtre (308) comprend en outre:

un rotateur adaptatif connecté pour recevoir le signal numérique à valeur complexe démodulé;

un filtre adaptatif à réponse par impulsion finie d'égalisation à action directe connecté au rotateur adaptatif;

un circuit d'addition de signal connecté au filtre adaptatif à réponse par impulsion finie d'égalisation à action directe et à un filtre adaptatif à réponse par impulsion finie, dont la sortie est connectée pour actualiser le rotateur adaptatif, le filtre adaptatif à réponse par impulsion finie d'égalisation à action directe et le filtre adaptatif à réponse par impulsion finie;

un détecteur de symbole connecté au circuit d'addition de signal et au convertisseur symbole - bit; et

le filtre adaptatif à réponse par impulsion finie connecté au détecteur de symbole et utilisable pour s'adapter au résultat de l'addition effectuée par le circuit d'addition de signal.

**15.** Récepteur de communication selon l'une quelconque des revendications 1 à 14, dans lequel le signal analogique modulé est un type de modulation sélectionné dans le groupe comprenant les types de modulation suivants: PAM (modulation d'impulsions en amplitude), QAM (modulation d'amplitude en quadrature), P8K (Modulation par déplacement de phase), CAP (AM-PM sans support), NRZ (modulation sans retour à zéro), QPSK (modulation par déplacement de phase en quadrature) à décalage et $\pi/4$-QPSK.

**16.** Procédé pour recevoir un signal de communication numérique en présence d'une interférence inter-symbole, comprenant les étapes consistant à:

recevoir un signal analogique modulé avec des informations numériques;

convertir le signal analogique pour produire un signal numérique;

multiplier le signal numérique avec des signaux sinusoïdaux et cosinusoïdaux pour produire un signal numérique à valeur complexe; et

pré-égaliser de façon adaptative le signal numérique à valeur complexe pour produire un signal numérique à valeur complexe pré-égalisé; dans lequel l'adaptation est réalisée selon la formule suivante:

$$p_{n+1}[l] = p_n[l] + \Gamma_n(s_2[n])s_1{}^*[n\text{-}l] \qquad l = 1, ..., L$$

égaliser de façon adaptative le signal numérique à valeur complexe pré-égalisé pour réduire l'interférence inter-symbole et pour produire un signal de symbole à valeur complexe corrigé; et

convertir le signal de symbole à valeur complexe corrigé en une information numérique.

**17.** Procédé selon la revendication 16, dans lequel l'étape de pré-égalisation adaptative comprend en outre les étapes consistant à:

filtrer de façon adaptative le signal numérique à valeur complexe à l'aide d'un filtre adaptatif pour produire un signal numérique à valeur complexe filtré;

additionner le signal numérique à valeur complexe avec le signal numérique à valeur complexe filtré pour produire le signal numérique à valeur complexe pré-égalisé;

produire une réponse non linéaire au signal à valeur complexe pré-égalisé; et

modifier les prises du filtre adaptatif en réponse à la réponse non linéaire au signal à valeur complexe pré-égalisé et en réponse au signal numérique à valeur complexe.

**18.** Procédé selon la revendication 16, dans lequel l'étape d'égalisation adaptative comprend en outre les étapes consistant à:

faire tourner de façon adaptative le signal à valeur complexe pré-égalisé pour produire un signal à valeur complexe tournant;

filtrer de façon adaptative le signal à valeur complexe tournant pour produire un signal à valeur complexe tournant filtré;

additionner le signal à valeur complexe tournant filtré avec une sortie de filtre adaptée pour produire un signal à valeur complexe adapté;

détecter les symboles dans le signal à valeur complexe adapté pour produire le signal de symbole à valeur complexe corrigé; et

produire la sortie de filtre adaptée en filtrant de façon adaptative le signal de symbole à valeur complexe corrigé.

**19.** Système de communication, comprenant:

un transmetteur de communication numérique (101);
un moyen de communication (102); et
un récepteur de communication numérique (103), comprenant:

une entrée pour recevoir un signal analogique modulé contenant des informations numériques;
un convertisseur analogique - numérique (303) connecté pour produire un signal numérique à valeur complexe à partir du signal analogique modulé;
un démodulateur connecté pour produire un signal numérique à valeur complexe démodulé à partir du signal numérique à valeur complexe;
un égaliseur numérique connecté pour recevoir le signal numérique à valeur complexe démodulé, comprenant:

un premier filtre (310) utilisable pour recevoir le signal numérique à valeur complexe démodulé, ledit premier filtre présentant des coefficients adaptatifs dans lequel une adaptation est réalisée selon la formule suivante:

$$p_{n+1}[l] = p_n[l] + \Gamma_n(s_2[n])s_\ell^*[n-l] \qquad \ell = 1, ..., L$$

où $p_n[\ell]$ est la $\ell^{\text{ième}}$ prise du premier filtre après le calcul de $n$ sorties, $p_n[0] = 1$, $s_\ell[n]$ est la séquence d'entrée au premier filtre, $s_2[n]$ est la sortie du premier filtre, et $\Gamma_n(\bullet)$ est une fonction dont les paramètres peuvent dépendre d'un indice de symbole $n$;
un deuxième filtre connecté au premier filtre et utilisable pour réduire la quantité de bruit et l'interférence inter-symbole dans le signal numérique à valeur complexe démodulé sans utiliser de données d'instruction;
un convertisseur symbole - bit connecté au deuxième filtre.

20. Récepteur de communication selon l'une quelconque des revendications 1 à 14, dans lequel le récepteur est utilisé avec un boucle d'abonnés numérique d'un réseau téléphonique.

21. Récepteur de communication selon l'une quelconque des revendications 1 à 14, dans lequel le récepteur est utilisé avec une infrastructure de télévision à câble coaxial.

**FIG. 1**

**FIG. 2**

EP 0 913 043 B1

FIG. 3

FIG. 4

$$S_2[n] = S_1[n] + \sum_{\ell=1}^{L} P_n[\ell]S_1[n-\ell] \qquad (\ell \geq 0)$$

$$P_{n+1}[\ell] = P_n[\ell] + \Gamma_n(S_2[n]) \cdot S_1^*[n-\ell] \qquad (\ell = 1..L)$$

$$\Gamma_n(x) = \delta_P[n] \cdot x$$

EP 0 913 043 B1

FIG. 5

EP 0 913 043 B1

$$S_3[n] = S_2[n] \cdot e^{j\theta[n]} \qquad , \qquad \theta[n+1] = \theta[n] + \beta_n(S_5[n])$$

$$S_4[n] = \sum_{m=1}^{M} C_n[m]S_3[n-m] \qquad , \qquad C_{n+1}[m] = C_n[m] + \varphi_n(S_5[n])S_3^*[n-m]$$

$$S_5[n] = S_4[n] + \sum_{i=1}^{N} d_n[i]\hat{a}[n-i] \qquad , \qquad d_{n+1}[i] = d_n[i] + \varphi_n(S_5[n])\hat{a}^*[n-i] \qquad (M \geq 1, \ N \geq 0)$$